## Europäisches Patentamt

## European Patent Office

## Office européen des brevets

(11) Veröffentlichungsnummer: **0 094 002**
**A1**

(12) # EUROPÄISCHE PATENTANMELDUNG

(21) Anmeldenummer: **83104339.3**

(22) Anmeldetag: **03.05.83**

(51) Int. Cl.³: **F 02 M 35/10**

(30) Priorität: **07.05.82 DE 3217251**

(43) Veröffentlichungstag der Anmeldung: **16.11.83**
**Patentblatt 83/46**

(84) Benannte Vertragsstaaten: **AT DE FR GB IT SE**

(71) Anmelder: **BAYERISCHE MOTOREN WERKE Aktiengesellschaft, Postfach 40 02 40 Petuelring 130, D-8000 München 40 (DE)**

(72) Erfinder: **Hoyer, Uwe, Ing. grad., Leopoldstrasse 206 App. 5411, D-8000 München 40 (DE)**
Erfinder: **Seidl, Jiri, Dipl.-Ing., Strassbergerstrasse 14, D-8000 München 40 (DE)**
Erfinder: **Melcher, Theo, Dipl.-Ing., Münchner Strasse 18, D-8033 Planegg (DE)**

(74) Vertreter: **Schweiger, Erwin, Bayerische Motoren Werke Aktiengesellschaft Postfach 40 02 40 Petuelring 130 - AJ-30, D-8000 München 40 (DE)**

(54) **Ansaugsystem für gemischverdichtende, fremdgezündete Mehrzylinder-Brennkraftmaschinen.**

(57) Ein Ansaugsystem (1) für eine gemischverdichtende, fremdgezündete Mehrzylinder-Brennkraftmaschine umfaßt Hauptsaugleitungen (2) und Hilfssaugleitungen (7), die jeweils einen gemeinsamen Einlaß (5, 8) aufweisen, wobei in jedem Einlaß (5, 8) eine Drossel (4, 9) angeordnet ist. Die Hauptsaugleitungen (2) sind durch Einlaßventile (6) der Brennkraftmaschine (10) gesteuert. Die Hilfssaugleitungen (7) münden in die Hauptsaugleitungen (2) nahe den Einlaßventilen (6). Bei niederer Last der Maschine (10) ist der Einlaß der Hauptsaugleitungen (2) weitestgehend gedrosselt, während die Drossel (9) der Hilfssaugleitungen (7) lastabhängig betätigt wird.

Vorgeschlagen wird eine Steuervorrichtung (11), die jede Hilfssaugleitung (7) taktgesteuert bzw. intermittierend öffnet. Erzielt ist damit in den Hauptsaugleitungen (2) ein relativ geringes Druckniveau, so daß jeder Zylinder (I, II, III, IV, V, VI) im Ansaugtakt seine Füllung über einen freien Ladungsstrahl von erheblicher Masse und hoher Geschwindigkeit aus der zugeordneten Hilfssaugleitung (7) erhält.

- 1 -

0094002

Ansaugsystem für gemischverdichtende, fremdgezündete
Mehrzylinder-Brennkraftmaschinen

Die Erfindung geht gemäß dem Oberbegriff des Anspruches 1
von der DE-OS 28 50 703 aus.

Bei der bekannten Bauart ist im Betrieb der Maschine bei
niederer Last das System der Hauptsaugleitungen einschließlich der Verteilkammer gegenüber dem System der Hilfssaugleitungen durch die der Verteilkammer vorgeschaltete
Drossel abgetrennt. Damit steht das weitestgehend gedrosselte System der Hauptsaugleitungen mit dem System der
Hilfssaugleitungen über deren nahe den Einlaßventilen
angeordneten Mündungen in ladungsführender Verbindung.
Daraus ergibt sich, daß das System der Hauptsaugleitungen
durch nachströmende Ladungen aus den Hilfskanälen bei
jeweils geschlossenem Einlaßventil im Anschluß an den
jeweiligen Ansaugtakt mindestens teilweise gefüllt wird.
Weiter wird hierbei im Ansaugtakt eines Zylinders über die
zugeordnete Hauptsaugleitung und der Verteilkammer aus den
übrigen, nicht angesteuerten Hauptsaugleitungen und den in
sie mündenden Hilfssaugleitungen Ladung nachgesaugt. Die
Menge dieser Ladung ist gegenüber der aus der zugehörigen
Hilfssaugleitung wegen der geringeren Strömungswiderstände
und der Teilfüllung im System der Hauptsaugleitungen
erheblich größer.

Ein freier Ladungsstrahl von geringer Masse und Ausströmgeschwindigkeit aus der jeweiligen Hilfssaugleitung ist hieraus die nachteilige Folge. Dessen Wirksamkeit zur Erzeugung einer Turbulenz bzw. Verwirbelung der Ladung insbesondere im Brennraum des Zylinders ist gering. Ein optimal homogenisiertes Gemisch im Brennraum für einen günstigen Verbrennungsablauf mit dem Ziel eines geringen Kraftstoffverbrauches und Schadstoffgehaltes der Abgase ist mit der bekannten Ladungseinbringung bei niederer Last und Drehzahl der Maschine kaum zu erzielen.

Aus der FR-PS 21 05 543 ist ein Ansaugsystem ähnlicher Bauart mit einer Verteilkammer bekannt, an die sich durch Einlaßventile gesteuerte Hauptsaugleitungen anschließen. In jeder Hauptsaugleitung ist nahe dem Einlaßventil eine Drosselklappe angeordnet. Zu jeder Drosselklappe ist im Bypass eine Hilfssaugleitung angeordnet, die nahe dem Einlaßventil in die Hauptsaugleitung mündet. Im Mündungsbereich jeder Hilfssaugleitung ist eine Kraftstoffgemisch-Austrittsdüse angeordnet, die mit der Mischkammer eines Vergasers verbunden ist, der durch eine Klappe im Einlaß der Verteilkammer gesteuert ist.

Bei diesem bekannten Ansaug-/Vergaser-System wird bei niederer Last der Brennkraftmaschine die gesamte Ladung im Ansaugtakt eines Zylinders über die zugeordnete Hilfssaugleitung angesaugt. Da hierbei der größte Teil der Ladung über die Hilfssaugleitung dem ansaugenden Zylinder zugeführt wird, ist die Geschwindigkeit des Ladungsstrahles günstig für eine Turbulenz bzw. Verwirbelung der Ladung bzw. des Gemisches.

Der Nachteil dieses bekannten Ansaugsystems ist in dem durch die vielen Einzeldrosselklappen bedingten hohen Bauaufwand zu sehen. Da ferner alle Drosselklappen exakt aufeinander abgestimmt sein müssen, ergibt sich eine aufwendige Einstellung dieses Ansaug-/Vergaser-Systems.

- 3 -

0094002

Schließlich ist aus der DE-PS 28 55 781 ein Ansaugsystem mit Drosselklappen in jeder Hauptsaugleitung und im Bypass zu den Drosselklappen angeordneten Hilfssaugleitungen bekannt, die nahe den Einlaßventilen in die Hauptsaugleitungen münden. Abweichend von dem Ansaugsystem gemäß der vorerwähnten FR-PS 21 05 543 wird hierbei das Gemisch durch eine dem Einlaß des Systems der Hauptsaugleitungen zugeordnete Einrichtung gebildet. Über erste Abschnitte der Hauptsaugleitungen wird das Gemisch den stromauf der Einzeldrosselklappen liegenden Saugmündungen der Hilfskanäle zugeführt. Neben hohem Bauaufwand und aufwendiger Einstellung ergibt sich hierbei als weiterer Nachteil die Möglichkeit der Entmischung des Gemisches in den Hauptsaugleitungen beim Betrieb in niederer Last.

Der Erfindung liegt die Aufgabe zugrunde, das gattungsgemäße Ansaugsystem für eine gemischverdichtende, fremdgezündete Mehrzylinder-Brennkraftmaschine derart zu verbessern, daß bei geringer Anzahl von Drosseln für jedes System von Hauptsaugleitungen und Hilfssaugleitungen die Ladung beim Betrieb in niederer Last und Drehzahl der Maschine überwiegend über die dem jeweils ansaugenden Zylinder zugeordnete(n) Hilfssaugleitung(en) zugeführt wird.

Diese Aufgabe wird durch die im Kennzeichen des Hauptanspruches angegebenen Merkmale gelöst.

Mit der Erfindung wird in vorteilhafter Weise in dem System der Hilfssaugleitungen jeweils nur die dem entsprechenden Zylinder zugeordnete Hilfssaugleitung(en) taktgesteuert geöffnet. Da auf diese Weise das System der Hauptsaugleitungen in seinem Einlaß bei niederer Last und Drehzahl weitestgehend gedrosselt ist und die übrigen Hilfssaugleitungen geschlossen sind, ergibt sich im System der Hauptsaugleitungen ein relativ niedriges Druckniveau. Das bedeutet, daß beim Ansaugtakt die allein über die geöffnete Hilfssaugleitung zugeführte Ladung als freier Ladungsstrahl von erheblicher Masse und Geschwindigkeit austritt, so daß eine hohe Turbulenz und/oder ein intensiver Wirbel in der Ladung bzw. dem Gemisch im Brennraum erzeugt wird. Mit der gesteigerten Durchwirbelung wird in einem mageren Gemisch der Zündverzug verkürzt, die Verbrennungsgeschwindigkeit erhöht und die Verbrennung stabil aufrechterhalten. Der bei niederer Last und Drehzahl stets hohe Anteil der Ladung an inertem Gas wirkt sich somit nicht nachteilig aus.

Zwar ist aus der DE-PS 939 780 eine im Takt des öffnenden Einlaßventiles durch eine Steuervorrichtung geöffnete Hilfssaugleitung bekannt. Jedoch bildet diese Hilfssaugleitung mit einer Hauptsaugleitung ein gesondertes Ansaugsystem für jeden Zylinder einer mehrzylindrigen Brennkraftmaschine, bei welcher nach dem Patentanspruch des oben genannten Patentes gattungsgemäß die Zylinderfüllung über zwei Vergaser und zwei getrennte, im Querschnitt verschieden bemessene Gemischansaugleitungen dem Zylinder u n m i t t e l b a r zugeführt wird. Zielsetzung hierbei ist es, mit einem gesondertem Ansaugsystem für jeden Zylinder und jeweils getakteter Hilfssaugleitung eine Entmischung des Gemisches beim Betrieb in niederer Last und Drehzahl der Maschine zu vermeiden. Durch die gesonderten Ansaugsysteme, die einen hohen Bauaufwand an Vergasern und Drosselklappen bedingen, führt die Lehre der vorbekannten Patentschrift in eine der Erfindung entgegengesetzte Richtung.

Eine Anregung ist hieraus nicht herleitbar, gemäß der Erfindung bei einer Mehrzylinder-Brennkraftmaschine mit einem e i n z i g e n Ansaugsystem mit Haupt- und Hilfssaugleitungen im jeweiligen Arbeitstakt bei Betrieb in niederer Last der Maschine die Ladung gezielt aus der jeweiligen Hilfssaugleitung dem Brennraum zuzuführen. Auch ein freier Ladungsstrahl mit hoher Geschwindigkeit, der zu hoher Turbulenz bzw. intensiver Verwirbelung der Ladung im Brennraum führt, ist nicht angeregt.

Schließlich ist aus der DE-OS 25 14 416 für eine mit Ladungs-Schichtung betriebene Brennkraftmaschine ein Ansaugsystem mit einer getakteten Hilfssaugleitung bekannt. Jedoch ist dieser vorbekannten Druckschrift keine Anregung für die Erfindung zu entnehmen. Über die getaktete Hilfssaugleitung wird lediglich Luft in den Endabschnitt der zugeordneten Hauptsaugleitung zur partiellen Abmagerung des gleichzeitig über diese Hauptsaugleitung zugeführten Kraftstoff-Luft-Gemisches eingebracht, wobei die Drosselklappen der Haupt- und Hilfssaugleitung gleichzeitig betätigt sein müssen.

In Ausgestaltung der Erfindung kann eine Hilfssaugleitung nach Anspruch 2 im Takt mit dem Einlaßventil oder nach Anspruch 3 im Takt einer intermittierend arbeitenden Gemischbildungseinrichtung der jeweiligen Hauptsaugleitung geöffnet werden. Wird in beiden Ausgestaltungen zur Gemischbildung jeweils eine Einspritzdüse verwendet, kann der Kraftstoff vorzugsweise vor dem Öffnungsbeginn der Hilfssaugleitung in die zugeordnete Hauptsaugleitung auf deren geschlossenes Einlaßventil ausgebracht werden. Beim Öffnen des Einlaßventiles wird der vorgelagerte Kraftstoff vom nachfolgenden, kompakten freien Ladungsstrahl aus der Hilfssaugleitung durch Turbulenz und Verwirbelung feinst verteilt. Da ein vorgelagerter Kraftstoff auf einem warmen bzw. heißen Einlaßventil zu verdampfen beginnt, kann eine erste Gemischaufbereitung vorteilhaft dadurch eingeleitet werden, daß die erfindungsgemäße Steuervorrichtung die Hilfssaugleitung bereits vor dem Öffnen des Einlaßventiles öffnet. Die Öffnungsdauer für die Hilfssaugleitung kann unveränderlich und in Relation zur Öffnungsdauer des Einlaßventiles kürzer und fest vorgegeben sein. Es kann jedoch die Öffnungsdauer für die Hilfssaugleitung mit einer vorzugsweise nach Anspruch 18 elektromagnetisch taktgesteuerten Steuervorrichtung in Verbindung mit einer Motor- bzw. Einspritzsteuer-Elektronik auch last- und drehzahlabhängig verändert werden. Weiter kann die Öff-

0094002

nungsdauer bzw. das Öffnungsintervall der Hilfssaugleitung nach Anspruch 4 in Sub-Intervalle aufgeteilt werden, wobei nach Anspruch 5 vorzugsweise ein erstes, relativ kurzes Sub-Intervall etwa synchron mit der Einspritzung von Kraftstoff auf das geschlossene Einlaßventil gesteuert ist. Das zweite, längere Sub-Intervall ist während der Öffnungsdauer des Einlaßventiles wirksam. Damit wird ein am heißen Einlaßventil vorbereitetes Gemisch durch einen kräftigen Ladungsstrahl von hoher Geschwindigkeit durch Turbulenz/Wirbel-Strömung im Brennraum homogenisiert.

In weiterer Ausgestaltung der Erfindung nach den Ansprüchen 6, 7 und 12 ist die Steuervorrichtung vorzugsweise ein mehrere oder alle Hilfssaugleitungen steuernder Drehschieber-Verteiler, der in einfacher Weise über den Antrieb der Nockenwelle der Brennkraftmaschine mechanisch zu den Einlaßventilen taktgesteuert wird. Der Drehschieber-Verteiler kann jedoch auch direkt mit der Nockenwelle drehfest verbunden sein. Ein zentraler Drehschieber-Verteiler ermöglicht ferner gleichlange Hilfssaugleitungen mit etwa gleichen Strömungswiderständen sowie gleichem Schwingverhalten der Ladungssäulen. Mit der Kammer des zentralen Drehschieber-Verteilers als Gemischbildungs-Kammer wird in Kombination mit einer in diese Kammer einspritzenden Kraftstoffdüse mit vorteilhaft geringem Bauaufwand eine zentrale Kraftstoffversorgung für das System der Hilfssaugleitungen erzielt. Es ist weiter möglich, den zentralen Lufteinlaß zu dieser Kammer nach Art eines Venturi-Rohres zu gestalten für eine zugeordnete Kraftstoff-Luft-Gemischdüse.

Der in Anspruch 8 beschriebene Drehschieber ist leicht im Gehäuse der Brennkraftmaschine baulich zu integrieren und ferner über den Nockenwellenantrieb taktgesteuert anzutreiben. Dieser Drehschieber ist besonders vorteilhaft bei mehreren, je einer Hauptsaugleitung zugeordneten Hilfssaugleitungen, wobei deren Mündungen in die Hauptsauglei-

tung verschieden gerichtet sein können, vorzugsweise auf eine Stelle im Endbereich der Hauptsaugleitung. In diesen eine gesteigerte Turbulenz- bzw. Wirbel-Strömung enthaltenden Endbereich kann nach einem Teilmerkmal des Anspruches 16 der Kraftstoffstrahl einer in die Hauptsaugleitung einspritzenden Kraftstoffdüse gerichtet sein. Dieser Drehschieber kann mit kurzen Hilfssaugleitungen kombiniert werden. Schließlich kann dem Drehschieber eine Gemischbildungseinrichtung vorgeschaltet sein.

Weiter kann die Öffnungsdauer jeder Hilfssaugleitung relativ zum Unterdruckverlauf so festgelegt werden, daß der Ladungsstrahl eine hohe Geschwindigkeit während der gesamten Ladungszufuhr erreicht. Dies kann nach dem Merkmal des Anspruches 9 dem Lastverlauf bei niederer Last und Drehzahl vorteilhaft angepaßt werden. Die Weiterbildung der Erfindung nach Anspruch 10 ergibt für jede Haupt- und zugeordnete Hilfs-Saugleitung eine gemeinsame Kraftstoffdüse für die Versorgung eines Zylinders über den gesamten Lastbereich der Brennkraftmaschine. Dabei ist mit der Maßnahme eines synchron zum jeweiligen Einlaßventil eingespritzten Kraftstoffes insbesondere bei niederer Last und Drehzahl ein homogenes Gemisch in vorteilhafter Weise erzielt. Vorteilhaft unterstützt ist die Bildung eines homogenen, stark durchwirbelten Gemisches zusätzlich mit der weiteren Ausgestaltung nach Anspruch 11, wobei der Kraftstoffstrahl bzw. Kraftstoffkegel an der Wand im Mündungsbereich der Hilfssaugleitung zusätzlich zerstäubt wird.

Mit einer nach Anspruch 13 im Mündungsbereich beispielsweise mit einer Lochblende ausgerüsteten Hilfssaugleitung wird in der austretenden Ladung eine feinballige Turbulenz erreicht. Diese Turbulenz bleibt bis in die Hochdruckphase eines Zylinders erhalten und somit wird in einem mageren Gemisch durch besonders starke Verwirbelung eine stabile Verbrennung mit bestimmungsgemäßen Abgasqualitäten erreicht. Eine vorteilhafte Anordnung einer derart gestalteten Mündung einer Hilfssaugleitung in Verbindung mit einer in die zugehörige Hauptsaugleitung spritzenden Kraftstoffdüse ist im Anspruch 16 beschrieben.

Mit der Ausgestaltung nach Anspruch 14 ist eine Makroturbulenz erreicht. Weiter kann in Fortbildung des Anspruches 13 beispielsweise durch eine Wendel im Mündungsbereich einer Hilfssaugleitung dem austretenden Ladungsstrahl ein Drall um die Strömungsachse aufgeprägt werden. Insbesondere ein um die Zylinderachse durch tangentiale Einströmung kreisender Ladungsstrahl ergibt mit dem zusätzlichen Drall eine raschere Verteilung des Gemisches bzw. der Ladung bei gesteigerter Verwirbelung. Schließlich ist mit dem Merkmal des Anspruches 15 bei höherer Teillast ein zusätzliches Absaugen des Gemisches aus der Hilfssaugleitung erzielt.

Die im Anspruch 17 beschriebene selbsttätige Steuerung von Hilfssaugleitungen durch das Einlaßventil der Brennkraftmaschine weist eine strömungsgünstige Anordnung der Hilfssaugleitung zu bzw. in der zugehörigen Hauptsaugleitung auf.

Eine wenig Einbauraum beanspruchende und an eine vorhandene Motorelektronik leicht adaptierbare, elektromagnetisch taktgesteuerte Steuervorrichtung ist schließlich in den Ansprüchen 18 und 19 beschrieben.

Die Erfindung ist anhand von schematisch dargestellten Ausführungsbeispielen beschrieben.

Die Zeichnung zeigt in

Fig. 1     ein Ansaugsystem für eine gemischverdichtende, fremdgezündete Brennkraftmaschine mit Haupt- und Hilfs-Saugleitungen,

- 9 -                                    0094002

Fig. 2       einen Drehschieber-Verteiler nach Fig. 1 im
             Schnitt mit einer Kraftstoffdüse,

Fig. 3       ein Diagramm der Zeitquerschnitte von Haupt- und
             Hilfs-Saugleitungen nach Fig. 1 und 2,

Fig. 4       ein weiteres Ansaugsystem im Querschnitt mit
             einem rohrförmigen Drehschieber, der sich über
             mehrere Zylinder erstreckt, und einer im Mündungsabschnitt der Hilfssaugleitung angeordneten
             Kraftstoffdüse,

Fig. 4a      ein Ansaugsystem nach Fig. 4 mit einem die
             Hilfssaugleitung in Sub-Intervallen öffnenden
             Drehschieber,

Fig. 4b      ein Diagramm der Zeitquerschnitte von Haupt- und
             Hilfs- Saugleitungen nach Fig. 4a,

Fig. 5
und 5a       eine Ausbildung zur Turbulenz-Erzeugung an der
             Mündung einer Hilfssaugleitung in die Hauptsaugleitung,

Fig. 6
und 7        jeweils ein Einlaßventil als Steuervorrichtung
             für Hilfssaugleitungen,

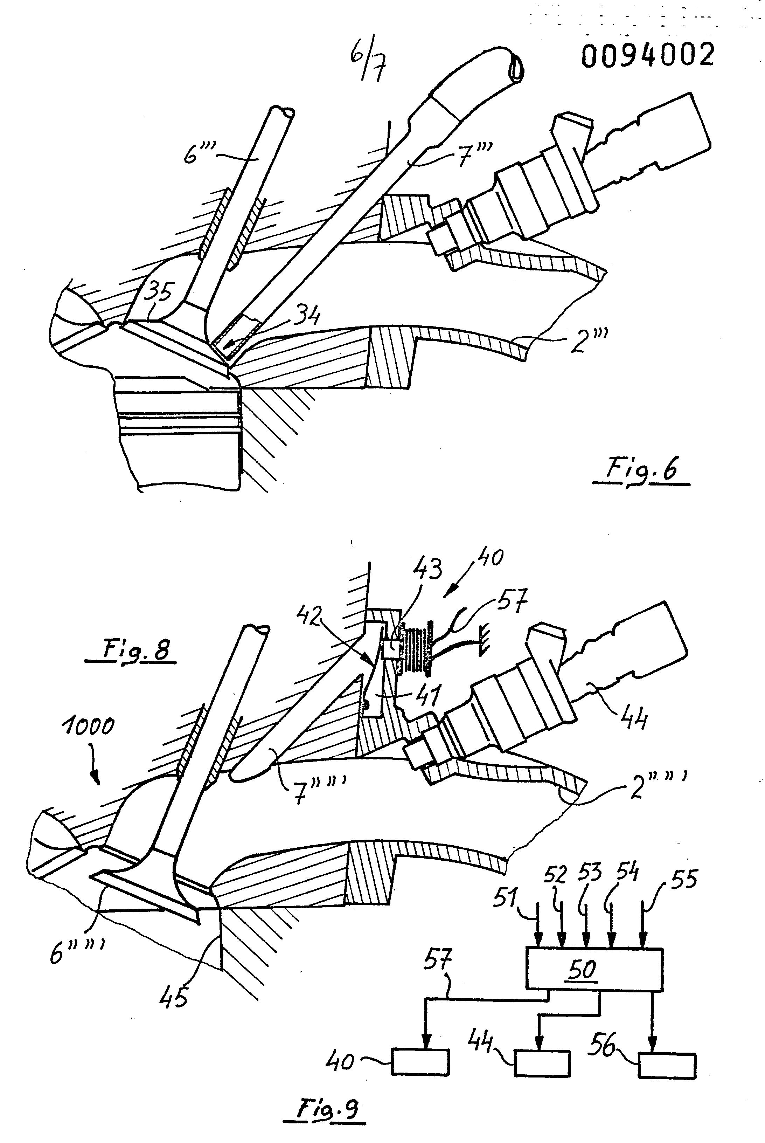

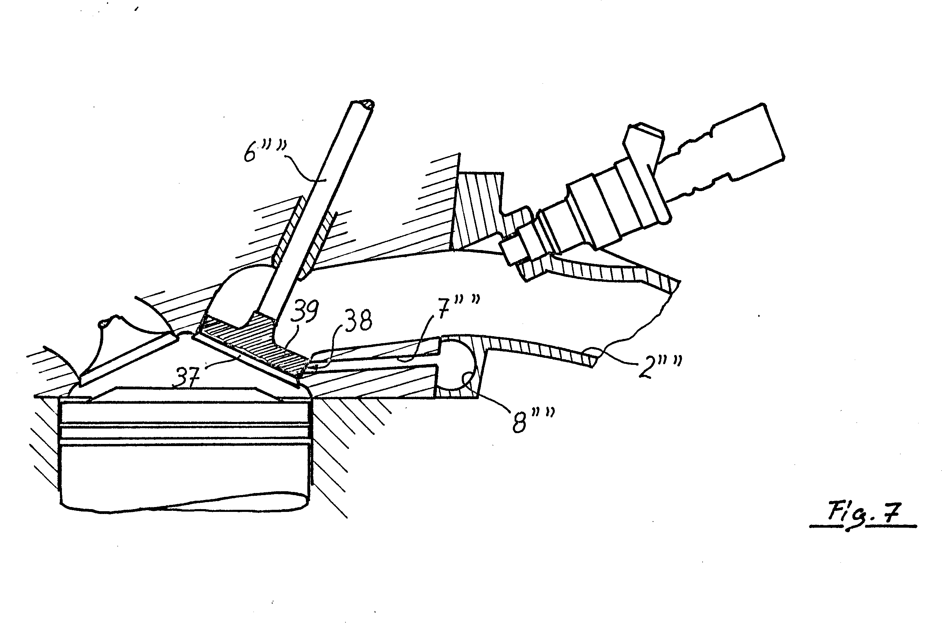

Fig. 8       ein weiteres Ansaugsystem mit einer elektromagnetisch taktgesteuerten Steuervorrichtung und

Fig. 9       ein Blockschaltbild eines elektronischen Steuergerätes zum Ansteuern der Steuervorrichtung nach
             Fig. 8.

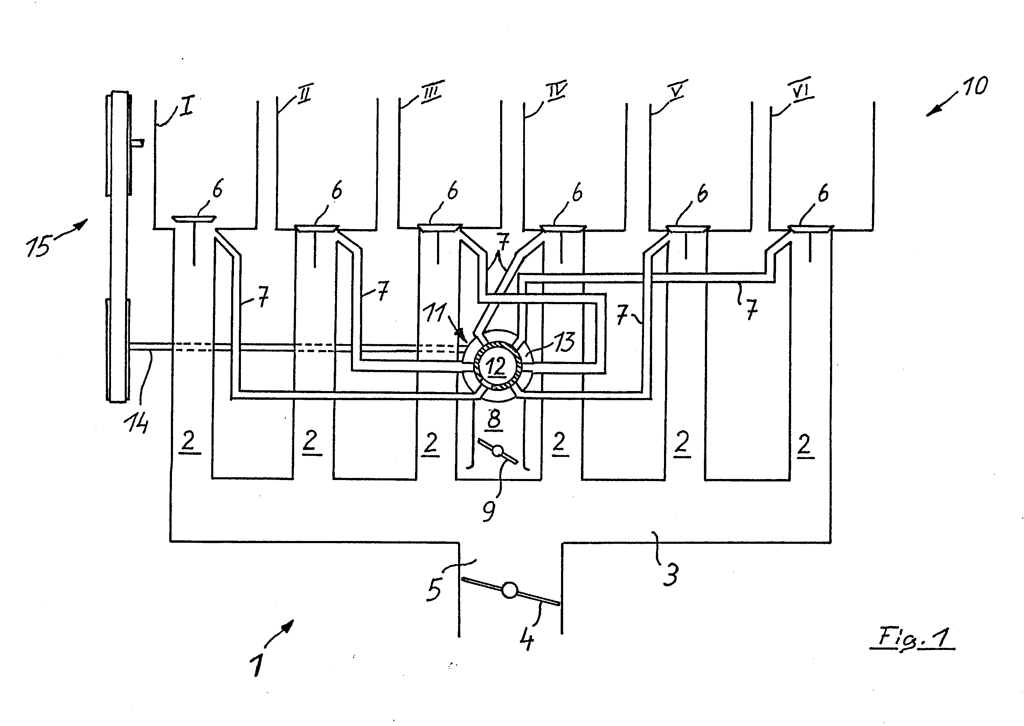

Ein Ansaugsystem 1 umfaßt Hauptsaugleitungen 2, die mit
einer Verteilkammer 3 verbunden sind, die durch eine Drossel 4 im Einlaß 5 gesteuert ist. Zylinderseitig sind die Hauptsaugleitungen 2 durch Einlaßventile 6 gesteuert. Weiter umfaßt das Ansaugsystem 1 Hilfssaugleitungen 7, die in die Hauptsaugleitungen 2 nahe den Einlaßventilen 6 münden. Die Hilfssaugleitungen 7 weisen gegenüber dem Querschnitt der jeweiligen Hauptsaugleitung 2 insbesondere im Mündungsbereich jeweils einen relativ kleinen Querschnitt auf, damit bei niederer Last und Drehzahl die relativ geringe Ladungsmasse jeweils als freier Ladungsstrahl mit hoher Geschwindigkeit ausgebracht wird. Den Hilfssaugleitungen 7 ist ein gemeinsamer Hilfseinlaßkanal 8 zugeordnet, in dem eine Hilfsdrossel 9 angeordnet ist. Diese wird bei niederer Last und Drehzahl der nur angedeuteten Mehrzylinder-Brennkraftmaschine 10 betätigt, wobei der Einlaß 5 der Verteilkammer 3 zu den Hauptsaugleitungen 2 durch die Drossel 4 weitestgehend gedrosselt ist. Zwischen dem Hilfseinlaßkanal 8 und den Hilfssaugleitungen 7 ist eine Steuervorrichtung 11 angeordnet, die im Takt mit dem öffnenden Einlaßventil 6 der jeweiligen Hauptsaugleitung 2 die zugeordnete Hilfssaugleitung 7 öffnet, z. B. Zylinder I in Fig. 1. Die Steuervorrichtung 11 ist als ein Drehschieber-Verteiler ausgebildet mit einem Rotor 12 und einem Stator 13, von dem die einzelnen Hilfssaugleitungen 7 ausgehen. Die Steuervorrichtung 11 ist über eine Antriebseinrichtung 14 durch den lediglich angedeuteten Nockenwellenantrieb 15 der Brennkraftmaschine 10 mechanisch mit den Einlaßventilen 6 taktgesteuert.

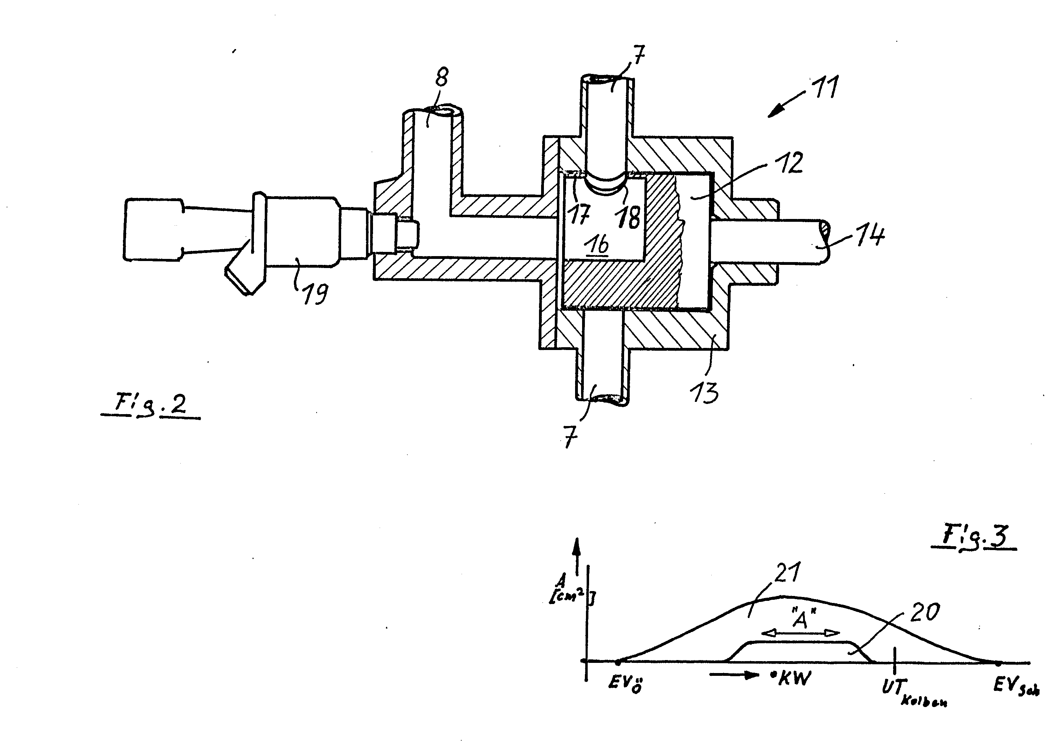

Nach Fig. 2 umfaßt der Rotor 12 der Steuervorrichtung bzw. des Drehschieber-Verteilers 11 eine Kammer 16, in die stirnseitig aus dem Hilfseinlaßkanal 8 die Ladung eintritt. Über eine in der Umfangsbegrenzung 17 der Kammer 16 angeordnete Steueröffnung 18 tritt die Ladung in den jeweiligen Hilfskanal 7, an dessen Mündung in der zugeordneten Hauptsaugleitung 2 Unterdruck aus dem Ansaugtakt über das geöffnete Einlaßventil 6 herrscht. Eine Kraftstoffdüse 19 spritzt Kraftstoff in die Rotorkammer 16 ein, die somit zugleich als Gemischbildungskammer dient. Damit eine Ansammlung von Kraftstoff in der Kammer 16 vermieden wird, ist diese als zur Steueröffnung 18 hin exzentrisch angeordnete Ausnehmung im Rotor 12 ausgebildet. Gleiche Wirkung hat eine radial gerichtete Bohrung zur Steueröffnung 18.

Der Querschnitt der Steueröffnung 18 ist so bemessen, daß sich für jede Hilfssaugleitung 7 gegenüber der Steuerzeit bzw. dem Zeitquerschnitt 21 des Einlaßventiles 6 für die zugeordnete Hauptsaugleitung 2 eine kürzere Steuerzeit bzw. ein geringerer Zeitquerschnitt 20 ergibt, Fig. 3. Weiter von Bedeutung für eine günstige Zylinderfüllung in niederer Last und Drehzahl der Brennkraftmaschine 10 ist die zeitliche Zuordnung der Steueröffnung 18 zum Öffnungsbeginn bzw. Öffnungsschluß des jeweiligen Einlaßventiles 6 bzw. dessen Zeitquerschnitt 21. Dies veranschaulicht das Diagramm der Fig. 3 durch die Zuordnung des Zeitquerschnittes 20 einer Hilfssaugleitung 7 zum Zeitquerschnitt 21 des Einlaßventiles 6 einer zugeordneten Hauptsaugleitung 2. Um für jeden Betriebspunkt in niederer Last und Drehzahl der Brennkraftmaschine 10 eine optimale Zylinderfüllung an durch Turbulenz- bzw. Wirbel-Strömung homogenisiertem, magerem Gemisch zu erzielen, kann die Steuervorrichtung 11 mit einer Verstelleinrichtung (nicht gezeigt) kombiniert sein. Mit dieser kann der Beginn für das Öffnen der Hilfssaugleitung 7 gegenüber dem Beginn des Öffnens des Einlaßventiles 6 last- und drehzahlabhängig festgelegt werden (Pfeil "A").

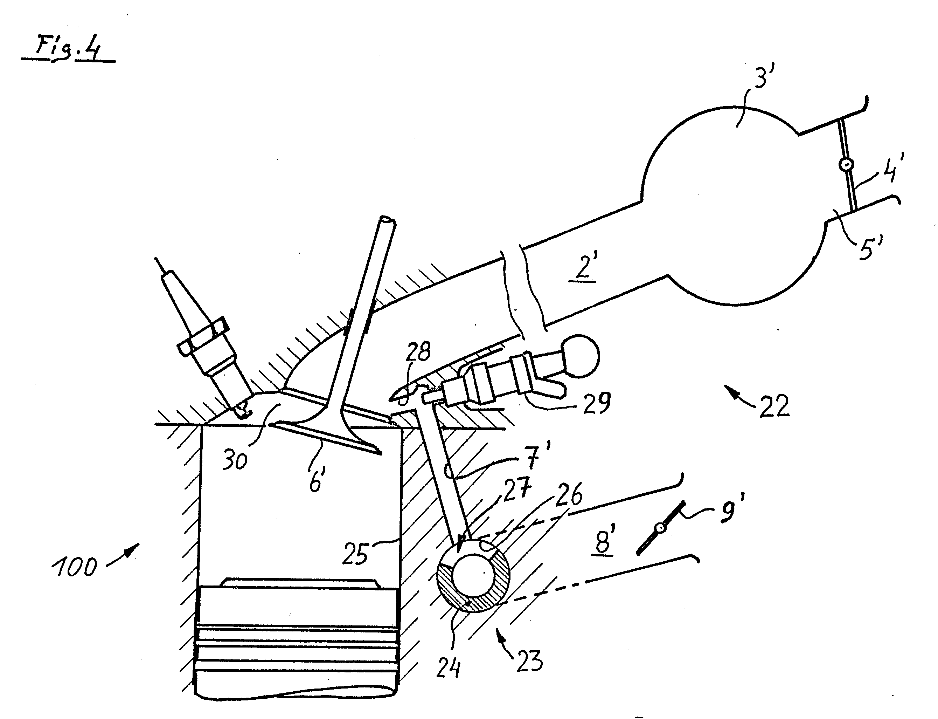

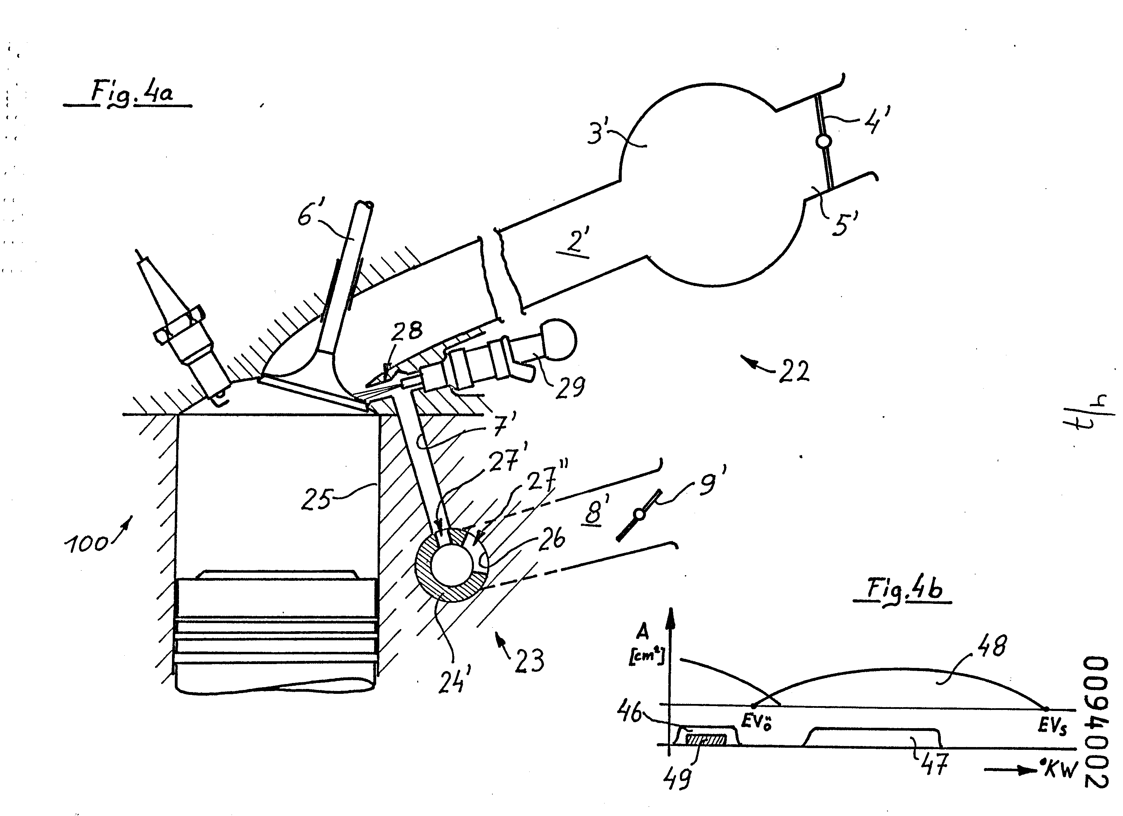

Das Ansaugsystem 22 nach Fig. 4 für eine teilweise dargestellte Brennkraftmaschine 100 ist im Aufbau mit dem Ansaugsystem 1 nach Fig. 1 gleich. Das Ansaugsystem 22 umfaßt eine Steuervorrichtung 23 mit einem rohrförmigen Drehschieber 24, der in einer quer zu den Zylindern 25 verlaufenden Gehäusebohrung 26 drehbar gelagert ist. Der Drehschieber 24 weist für die Hilfssaugleitungen 7' in

**0094002**

axialen Abständen angeordnete Steuerschlitze 27 auf, die für die einzelnen Hilfssaugleitungen 7' am Umfang des Drehschiebers 24 entsprechend der Zündfolge der Brennkraftmaschine 100 verteilt angeordnet sind. Bezüglich der Steuerzeiten der Hilfssaugleitungen 7' sowie ihren zeitlichen Zuordnungen zu den Steuerzeiten der Einlaßventile 6' können die zur Fig. 1 beschriebenen Maßnahmen angewandt werden.

Die Fig. 4 zeigt ferner, daß im Mündungsbereich 28 jeder Hilfssaugleitung 7' eine Kraftstoffdüse 29 angeordnet ist. Deren Kraftstoffstrahl bzw. Kraftstoffkegel ist mit der Mündung der Hilfssaugleitung 7' im wesentlichen gleichgerichtet. Zur zusätzlichen Kraftstoffzerstäubung kann die Kraftstoffdüse 29 derart angeordnet sein, daß wenigstens ein Teil des Kraftstoffstrahles bzw. des Kraftstoffkegels gegen die Wand im Mündungsbereich 28 der Hilfssaugleitung 7' gerichtet ist. Die Bildung eines mageren Gemisches in niederer Last und Drehzahl der Brennkraftmaschine 100 wird weiter dadurch unterstützt, daß der Kraftstoffstrahl der Kraftstoffdüse 29 synchron zum Einlaßventil 6' steuerbar ist. Die Kraftstoffdüse 29 ist zur Kraftstoffversorgung des Zylinders 25 der Brennkraftmaschine 100 für den gesamten Lastbereich ausgelegt. Bei höherer Teillast kann durch die Anordnung der Mündung der Hilfssaugleitung 7' im engsten Querschnitt einer venturiartig vor dem Einlaßventil 6' ausgebildeten Hauptsaugleitung 2' die Ladung bzw. das Gemisch durch den Venturi-Effekt aus der Hilfssaugleitung 7' zusätzlich gesaugt werden. Bei Vollast der Brennkraftmaschine 100 können alle Hilfssaugleitungen 7' über die Hilfsdrossel 9' im Hilfseinlaßkanal 8' zum Drehschieber 24 weitestgehend gedrosselt sein, so daß aus dem vorzugsweise auf den Ventilspalt 30 gerichteten Mündungsbereich 28 jeder Hilfssaugleitung 7' im wesentlichen nur der Kraftstoffstrahl austritt.

Das Ansaugsystem nach Fig. 4a ist bis auf einen Drehschieber 24' identisch mit dem der Fig. 4. Der Drehschieber 24' der Steuervorrichtung 23' umfaßt für jede Hilfssaugleitung 7' zwei in einem Winkelabstand angeordnete Steuerschlitze 27' und 27". Mit den im Querschnitt unterschiedlich großen Steuerschlitzen 27' und 27" ist die gesamte Öffnungsdauer für die Hilfssaugleitung 7' nach Fig. 4b in zwei Sub-Intervalle 46 und 47 während eines Arbeitsspieles des Zylinders 25 unterteilt. Wie aus Fig. 4b weiter hervorgeht, ist das erste Sub-Intervall 46 kürzer als das zweite Sub-Intervall 47. Ferner hat das erste Sub-Intervall 46 sein Ende vor dem Öffnungsbeginn des Einlaßventiles 6', veranschaulicht anhand der Zeitquerschnitte 46 und 48 in Fig. 4b. Während des Sub-Intervalles 46 wird über die Kraftstoffdüse 29 Kraftstoff in die vom Einlaßventil 6' verschlossene Hauptsaugleitung 2' eingespritzt, veranschaulicht durch den Zeitquerschnitt 49 im Zeitquerschnitt 46. Durch das temperierte Einlaßventil 6' ist eine erste Gemischaufbereitung eingeleitet. Während der Öffnungsdauer des Einlaßventiles 6', veranschaulicht durch den Zeitquerschnitt 48, steht die Hilfssaugleitung 7' mit dem im Querschnitt größeren Steuerschlitz 27" in Verbindung, Sub-Intervall 47. Dieses ist in Bezug zum Zeitquerschnitt 48 des Einlaßventiles 6' so gewählt, daß durch den herrschenden Unterdruck während des Ansaugvorganges des Zylinders 25 über das Sub-Intervall 47 ein kräftiger Ladungsstrahl von hoher Geschwindigkeit erzielt wird. Damit ist im Brennraum des Zylinders 25 eine kräftige Turbulenz- bzw. Wirbelströmung erreicht, durch die das Gemisch bis in die Verbrennung hinein homogenisiert wird.

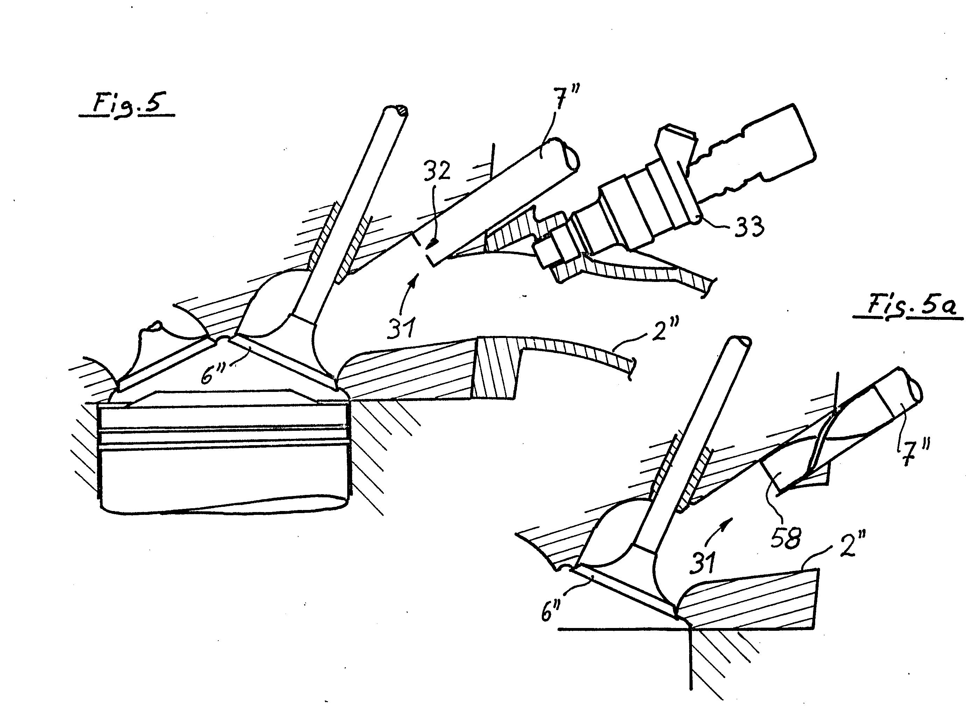

In Fig. 5 ist die Mündung 31 der Hilfssaugleitung 7" in die Hauptsaugleitung 2" mit einer Lochblende 32 ausgerüstet. Erzielt ist damit eine feinballige Turbulenz in der in den Endbereich der Hauptsaugleitung 2" bzw. in den Zylinder eingebrachten Ladung. Weiter ist die Mündung 31 der Hilfssaugleitung 7" in der Hauptsaugleitung 2" zwischen dem Einlaßventil 6" und einer in der Wandung der Hauptsaugleitung 2" befestigten Kraftstoffdüse 33 angeordnet. Die Befestigung der Kraftstoffdüse 33 ist derart, daß deren Kraftstoffstrahl bzw. Kraftstoffkegel in den die Turbulenz- bzw. Wirbel-Strömung enthaltenden Endbereich der Hauptsaugleitung 2" gerichtet ist, mit der Folge einer intensiven Vermischung von Luft und Kraftstoff.

In Fig. 5a ist die Hilfssaugleitung 7" im Bereich der Mündung 31 mit einer Wendel 58 ausgebildet, die dem Ladungsstrahl einen Drall um die Strömungsachse aufzwingt.

Fig. 6 zeigt eine Hilfssaugleitung 7'", die in der Hauptsaugleitung 2'" mit der Mündung 34 dicht am Ventilteller 35 des Einlaßventiles 6'" endet. Die Hilfssaugleitung 7'" ist durch das Einlaßventil 6'" taktgesteuert.

Fig. 7 zeigt eine Hilfssaugleitung 7"", die zum Ventilteller 37 des Einlaßventiles 6"" radial in die Hauptsaugleitung 2"" mündet. Die Mündung 38 der Hilfssaugleitung 7"" ist über den Umfang eines zylindrischen Aufsatzes 39 am Einlaßventil 6"" gesteuert.

Schließlich zeigt Fig. 8 eine Hilfssaugleitung 7""' mit einer Steuervorrichtung 40, die elektromagnetisch taktgesteuert ist. Jede der Hilfssaugleitungen 7""' ist mit einem Hilfseinlaßkanal 41 verbunden. Die Anschlußöffnungen der Hilfssaugleitungen 7""' in den Hilfseinlaßkanal 41 sind jeweils durch eine Federzunge 42 verschlossen. Angesteuerte Elektromagnete 43 heben die Federzungen 42 von der jeweiligen Anschlußöffnung ab, so daß ein Strömungsquerschnitt freigegeben wird. Der Hauptsaugleitung 2""' zum Zylinder 45 ist eine Kraftstoffdüse 44 zugeordnet.

Jede Steuervorrichtung 40 kann von einem elektronischen Steuergerät 50 nach Fig. 9 angesteuert sein. Über Eingänge 51 bis 55 werden dem Steuergerät vorzugsweise Signale bezüglich Drehzahl, Kurbelwinkel, Luftmenge und Temperatur der Ansaugluft sowie des Kühlwassers der Brennkraftmaschine 1000 zugeführt. Mit daraus ermittelten Ausgangssignalen werden die Zündanlage 56, die Einspritzventile 44 und die Steuervorrichtungen 40 angesteuert, letztere über den Ausgang 57. Jede der Steuervorrichtungen 40 kann beispielsweise in der für das Diagramm der Fig. 3 beschriebenen Art angesteuert sein oder in der Art nach Fig. 4b mit in Sub-Intervallen aufgeteilten Öffnungszeiten für die Hilfssaugleitungen 7""'. Mit dem Steuergerät 50 ist es darüber hinaus möglich, den zeitlichen Abstand zwischen den Sub-Intervallen 46 und 47 last- und drehzahlabhängig zu variieren. Weiter kann die Dauer eines oder beider Sub-Intervalle 46, 47 variiert werden, um so eine betriebspunktabhängige Dosierung der Ladung bzw. des Gemisches zu erzielen.

Im Rahmen der Erfindung kann zum Ausgleich von Strömungsverlusten die Ladung bzw. das Gemisch in der jeweiligen Hilfsleitung unter einem höheren Druck als dem Ansaugdruck stehen.

Patentansprüche:

1. Ansaugsystem für gemischverdichtende, fremdgezündete Mehrzylinder-Brennkraftmaschinen,
   - mit einer Verteilkammer, die einen drosselgesteuerten Einlaß aufweist,
   - mit durch Einlaßventile im Zylinderkopf gesteuerten Hauptsaugleitungen, die mit der Verteilkammer verbunden sind,
   - mit in die Hauptsaugleitungen insbesondere nahe den Einlaßventilen mündenden Hilfssaugleitungen,
   - die gegenüber dem Querschnitt der jeweiligen Hauptsaugleitung jeweils einen relativ kleinen Querschnitt im Mündungsbereich aufweisen, und
   - die einen gesonderten, drosselgesteuerten Hilfs-Einlaß aufweisen,
   - der bei niederer Last und Drehzahl der Maschine betätigt ist,
   - wobei der Einlaß der Verteilkammer weitestgehend gedrosselt ist,
   gekennzeichnet durch
   - eine Steuervorrichtung (11, 23, 6"', 6"" bzw. 39, 40,23'),
   - die jede bzw. die Hilfssaugleitung(en) (7, 7', 7", 7'", 7"", 7""') taktgesteuert (intermittierend) öffnet.

2. Ansaugsystem nach Anspruch 1, dadurch gekennzeichnet, daß die Steuervorrichtung(en) (11, 23, 23', 6''', 6'''' bzw. 39, 40) im Takt mit dem Einlaßventil (6, 6', 6'', 6''', 6'''', 6''''') der jeweiligen Hauptsaugleitung (2, 2', 2'', 2''', 2'''', 2''''') die zugeordnete(n) Hilfssaugleitung(en) (7, 7', 7'', 7''', 7'''', 7''''') öffnet.

3. Ansaugsystem nach Anspruch 1 oder 2, dadurch gekennzeichnet, daß die Steuervorrichtung (40) im Takt einer intermittierend arbeitenden Gemischbildungseinrichtung (44) der jeweiligen Hauptsaugleitung (2''''') die zugeordnete Hilfssaugleitung (7''''') öffnet.

4. Ansaugsystem nach einem der Ansprüche 1 bis 3, dadurch gekennzeichnet, daß die Steuervorrichtung (23', 40) jede bzw. die Hilfssaugleitung(en) (7', 7''''') bei einem Arbeitsspiel des jeweiligen Zylinders (25, 45) mehrmals öffnet.

5. Ansaugsystem nach den Ansprüchen 1 bis 4, dadurch gekennzeichnet, daß die Steuervorrichtung (23', 40) jede bzw. die Hilfssaugleitung(en) (7', 7''''') in einem ersten Takt mit der Gemischbildungseinrichtung (29, 44) oder dem Einlaßventil (6', 6''''') und in einem zweiten Takt mit dem Einlaßventil (6', 6''''') oder der Gemischbildungseinrichtung (29, 44) der zugeordneten Hauptsaugleitung (2', 2''''') öffnet.

6. Ansaugsystem nach einem der Ansprüche 1 bis 5, dadurch gekennzeichnet, daß die Steuervorrichtung(en) (11, 23, 23') mit den Einlaßventilen (6, 6') und/oder mit den Kraftstoffdüsen (29) mechanisch taktgesteuert ist bzw. sind.

- 3 -    0094002

7. Ansaugsystem nach einem der Ansprüche 1 bis 6, dadurch gekennzeichnet, daß die Steuervorrichtung (11, 23, 23') als ein Drehschieber-Verteiler ausgebildet ist, von dem die einzelnen Hilfssaugleitungen (7, 7') ausgehen.

8. Ansaugsystem nach Anspruch 7, dadurch gekennzeichnet,
   - daß die Steuervorrichtung (23, 23') als ein über mehrere Zylinder sich erstreckender, rohrförmiger Drehschieber (24, 24') ausgebildet ist,
   - der in axialen Abständen angeordnete Steuerschlitze (27, 27', 27") aufweist,
   - die für die einzelnen Hilfssaugleitungen (7') am Umfang des Drehschiebers entsprechend der Zündfolge der Maschine und/oder der Taktfolge der Gemischbildungseinrichtung verteilt angeordnet sind.

9. Ansaugsystem nach einem der Ansprüche 1 bis 8, dadurch gekennzeichnet,
   - daß die Steuervorrichtung (11, 23, 23', 40 bzw. 50) mit einer Verstelleinrichtung kombiniert ist,
   - durch die der Beginn des Öffnens der Hilfssaugleitung gegenüber dem Beginn des Öffnens des Einlaßventiles last- und drehzahlabhängig festlegbar ist.

10. Ansaugsystem nach einem der Ansprüche 1 bis 9, dadurch gekennzeichnet,
    - daß im Mündungsbereich (28) jeder Hilfssaugleitung (7') eine Kraftstoffdüse (29) angeordnet ist,
    - deren Kraftstoffstrahl bzw. Kraftstoffkegel mit der Mündung der Hilfssaugleitung im wesentlichen gleichgerichtet ist.

11. Ansaugsystem nach Anspruch 10, dadurch gekennzeichnet,
    - daß die Kraftstoffdüse (29) derart angeordnet ist,
    - daß wenigstens ein Teil des Kraftstoffstrahles bzw. des Kraftstoffkegels gegen die Wand im Mündungsbereich (28) der Hilfssaugleitung (7') gerichtet ist.

12. Ansaugsystem nach Anspruch 7, dadurch gekennzeichnet,
    - daß der Drehschieber-Verteiler (11) eine als radiale
      Bohrung oder exzentrische Ausnehmung gestaltete
      Kammer (16) aufweist,
    - die als Gemischbildungskammer dient.

13. Ansaugsystem nach einem der Ansprüche 1 bis 12, dadurch
    gekennzeichnet, daß die Mündungen der Hilfssaugleitungen eine Turbulenz- bzw. Wirbel-Strömung erzeugende
    Ausbildung [Lochblende (32), Wendel (58)] aufweisen.

14. Ansaugsystem nach einem der Ansprüche 1 bis 13, dadurch
    gekennzeichnet, daß die Mündungen der Hilfssaugleitungen im wesentlichen tangential zur Zylinderachse ausgerichtet sind.

15. Ansaugsystem nach einem der Ansprüche 1 bis 14, dadurch
    gekennzeichnet, daß jede Mündung in einem venturiartigen Abschnitt der Hauptsaugleitung vor dem jeweiligen
    Einlaßventil angeordnet ist.

16. Ansaugsystem nach Anspruch 13, dadurch gekennzeichnet,
    - daß jede Hilfssaugleitung (7") in die Hauptsaugleitung (2") zwischen dem Einlaßventil (6") und einer in
      der Wandung der Hauptsaugleitung befestigten Kraftstoffdüse (33) mündet,
    - wobei die Kraftstoffdüse derart befestigt ist, daß
      deren Kraftstoffstrahl bzw. Kraftstoffkegel in den
      die Turbulenz- bzw. Wirbel-Strömung enthaltenden
      Endbereich der Hauptsaugleitung gerichtet ist.

17. Ansaugsystem nach den Ansprüchen 1, 2 und 10 bis 14,
    dadurch gekennzeichnet,
    - daß das Einlaßventil (6"', 6"") als Steuervorrichtung
      wirkt und
    - eine zum Ventilteller (35, 37) außermittig oder etwa
      radial gerichtete Mündung (34, 38) der Hilfssaugleitung (7'", 7"") stirnseitig verschließt.

18. Ansaugsystem nach den Ansprüchen 1 bis 5, 9 bis 11 und 13 bis 16, dadurch gekennzeichnet, daß die Steuervorrichtung(en) (40) elektromagnetisch taktgesteuert ist bzw. sind.

19. Ansaugsystem nach Anspruch 18, dadurch gekennzeichnet, daß die Steuervorrichtung (40) für eine Hilfssaugleitung (7"") als eine elektromagnetisch betätigbare Federzunge (42) ausgebildet ist.

20. Ansaugsystem nach Anspruch 18 oder 19, dadurch gekennzeichnet, daß die Steuervorrichtung (40) von einer Motor- bzw. Einspritz-Elektronik (50) abgeleitet bzw. bestimmt die Öffnungsdauer der Hilfssaugleitung (7"") last- und drehzahlabhängig steuert.

21. Ansaugsystem nach einem der Ansprüche 1 bis 20, dadurch gekennzeichnet, daß die Ladung bzw. das Gemisch in den Hilfssaugleitungen bzw. Hilfsladeleitungen unter einem höheren Druck als dem Ansaugdruck steht.

0094002

Fig.1

Fig. 2

8

7

11

12

17   18

16

19

14

13

7

Fig. 3

$A$
$[cm^2]$

21

"A"

20

$EV_{\ddot{O}}$   →  °KW   $UT_{Kolben}$   $EV_{Sch}$

0094002

Fig.4

Fig.4a

Fig.4b

Fig.5

7"

32

33

31

2"

6"

Fig.5a

7"

58

31

2"

6"

6/7

0094002

6''''

7'''

35

34

2'''

Fig. 6

Fig. 8

1000

43    40

42    57

41

44

7"""

2"""

6"""

45

51  52  53  54  55

57

50

40    44    56

Fig. 9

1/1

Fig. 7

Europäisches
Patentamt

**EUROPÄISCHER RECHERCHENBERICHT**

0094002
Nummer der Anmeldung

EP 83 10 4339

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | FR-A-2 105 543 (LAPRADE) <br> * Seite 8, Zeilen 1-26; Figuren 1,2 * | 1,5,10 | F 02 M 35/10 |
| A | GB-A-2 034 404 (NISSAN) <br> * Seite 3, Zeilen 63-91 * | 1,5,10 | |
| D,A | DE-C- 939 780 (BMW) <br> * Seite 2, Zeilen 12-40 * | 1,2,17 | |
| A | GB-A-2 016 081 (YAMAHA) <br> * Seite 1, Zeile 51 - Seite 2, Zeile 11; Seite 3, Zeile 111 - Seite 4, Zeile 50 * | 1,5 | |
| A | GB-A-1 135 482 (INST. DU PETROLE) <br> * Seite 4, Zeilen 43-79; Seite 5, Zeilen 7-52; Seite 6, Zeilen 9-14 * | 1 | RECHERCHIERTE SACHGEBIETE (Int. Cl. ³) <br><br> F 02 M <br> F 02 B <br> F 01 L |
| A | DE-A-3 033 679 (SUZUKI) <br> * Seite 10, Zeile 5 - Seite 11, Zeile 25; Seite 14, Zeilen 24-26; Seite 16, Zeilen 16-23; Seite 17, Zeile 26 - Seite 18, Zeile 1 * | 1,14 | |
| A | US-A-4 323 041 (YAMAHA) <br> * Spalte 1, Zeile 61 - Spalte 2, Zeile 12 * | 1 | |

--- -/-

Der vorliegende Recherchenbericht wurde für alle Patentansprüche erstellt.

| Recherchenort <br> DEN HAAG | Abschlußdatum der Recherche <br> 07-06-1983 | Prüfer <br> TATUS W.D. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 611 806 (TOYOTA) <br> * Seite 18, Zeile 5 - Seite 20, Zeile 14 * <br><br> ----- | 2,7,14 | |

RECHERCHIERTE SACHGEBIETE (Int. Cl. 3)

Der vorliegende Recherchenbericht wurde für alle Patentansprüche erstellt.

| Recherchenort <br> DEN HAAG | Abschlußdatum der Recherche <br> 07-06-1983 | Prüfer <br> TATUS W.D. |
|---|---|---|